# FASCICULE DE BREVET EUROPEEN

(11) **EP 1 820 785 B1**
(45) Date de publication et mention de la délivrance du brevet: **13.06.2012**
(21) Numéro de dépôt: 07300768.4
(22) Date de dépôt: 02.02.2007
(51) Int. Cl.: C04B 35/484, C04B 35/488, C04B 35/49, C09K 3/14, B22D 41/32

(54) **Grain fondu d'alumine - oxyde de titane - zircone**
Aus Aluminiumoxid, Titandioxid, Zirkonoxid geschmolzenes Korn
Fused grain of alumina - titanium dioxide - zirconia

(30) Priorité: 17.02.2006 FR 0601403
(43) Date de publication de la demande: 22.08.2007
(73) Titulaire: Saint-Gobain Centre de Recherches et d'Etudes Européen, 92400 Courbevoie (FR)
(72) Inventeur: Marlin, Samuel, 13750 Plan D'Orgon (FR); Latournerie, Jérôme, 95280 Jouy Le Montier (FR)
(74) Mandataire: Sartorius, Jérome

(56) Documents cités:
- FR-A1- 2 787 106
- JP-A- 2003 245 771
- DATABASE WPI Week 198335 Derwent Publications Ltd., London, GB; AN 1983-750846 XP002403485 & JP 58 125660 A (KUROSAKI REFRACTORIES CO) 26 juillet 1983 (1983-07-26)

## Description

L'invention se rapporte à des grains fondus d'alumine - oxyde de titane - zircone, à un procédé de fabrication de tels grains, et à une plaque tiroir comportant de tels grains.

Les plaques tiroirs, ou « slide gates » en anglais, sont des pièces utilisées en coulée continue de l'acier pour ouvrir ou fermer des répartiteurs ou des orifices d'évacuation de poches de coulée en communication de fluide, via une buse coulissante (« sliding nozzle » en anglais), avec des lingotières. Les plaques tiroirs doivent donc présenter une bonne résistance mécanique, notamment aux chocs thermiques et à l'écaillage, et une bonne résistance chimique, notamment à la corrosion.

Classiquement, les plaques tiroirs sont obtenues par frittage d'un mélange de grains fondus d'alumine-zircone et de grains fondus de zircone-mullite. Le composite alumine-zircone/zircone-mullite résiste particulièrement bien aux chocs thermiques du fait de son renforcement par microfissuration. En effet, au cours du chauffage, la transformation allotropique de la zircone s'accompagne d'une modification importante de volume. Cette variation dimensionnelle provoque la formation de microfissures. Ces microfissures apparaissent également aux interfaces entre les particules de zircone-mullite et la matrice d'alumine-zircone du fait de la forte différence de dilatation thermique entre l'alumine-zircone (α_{1000°C}=9,6.10⁻⁶°C⁻¹) et la zircone-mullite (α_{1000°C}=6,9.10⁻⁶°C⁻¹). Ces deux phénomènes entraînent la microfissuration de la pièce, augmentant ainsi sa capacité à absorber l'énergie lors des chocs thermiques.

Cependant, la zircone-mullite présente le désavantage d'avoir une faible résistance à la corrosion, constituant ainsi le point faible du composite.

L'abrégé de JP-A-5 81 25 660 décrit une plaque tiroir obtenue par calcination d'un mélange de matières premières sans évoquer l'oxyde de titane TiO₂.

Il existe donc un besoin pour un nouveau grain apte à être substitué au grain de mullite-zircone lors de la fabrication des plaques tiroirs mais permettant de fabriquer des plaques tiroirs présentant une résistance à la corrosion améliorée. Le but de l'invention est de satisfaire ce besoin.

Selon l'invention, on atteint ce but au moyen d'un grain fondu d'alumine - oxyde de titane - zircone présentant, pour un total de 100%, la composition chimique suivante :
- Al₂O₃ : plus de 10%, de préférence plus de 15% et moins de 35%;
- TiO₂ : plus de 10%, de préférence plus de 15%, et moins de 40%, de préférence moins de 30 %, de préférence encore moins de 25% ;
- rO₂ : plus de 50% et, de préférence, moins de 70%, voire moins de 61%,
- Impuretés : moins de 2%,
les pourcentages étant des pourcentages en masse sur la base des oxydes, le grain ne présentant pas de phase de TiO₂ et plus de 98 % en masse de la zircone étant monoclinique.

Selon un mode de réalisation préféré de l'invention, la composition du grain comporte environ 60% de ZrO₂, environ 20% de Al₂O₃ et environ 18 à 20% de TiO₂.

De manière surprenante, les inventeurs ont constaté que la substitution des grains de mullite-zircone par des grains selon l'invention permet de fabriquer des plaques tiroirs composites plus résistantes à la corrosion, sans dégrader la résistance aux chocs thermiques.

En outre, les inventeurs ont constaté que l'absence de phase de TiO₂ améliore la résistance à la corrosion. De préférence, le grain selon l'invention ne présente que des phases
- de Al₂O₃ avec Zr₅Ti₇O₂₄ et/ou,
- de (ZrTiO₄ ou ZrO₂) avec du titanate d'alumine Al₂TiO₅.

Un grain préféré présente les phases Al₂O₃-Zr₅Ti₇O₂₄, le grain préféré entre tous présentant les phases ZrO₂-Al₂TiO₅.

Enfin, le grain selon l'invention peut être élaboré par électrofusion, ce qui permet la fabrication de grandes quantités de grains avec des rendements intéressants. Le rapport prix/performance est donc excellent.

De préférence, le grain fondu selon l'invention comporte encore une ou plusieurs des caractéristiques optionnelles suivantes :
- La composition chimique présente en outre une teneur en oxyde d'étain (SnO₂) de plus de 2%, de préférence de plus de 5 %, et/ou de moins de 10%, les plages des autres constituants n'étant pas modifiées. Pour un total de 100%, la composition chimique du grain est alors la suivante, en pourcentages en masse sur la base des oxydes :
   - Al_{Z}O₃ : plus de 10%, de préférence plus de 15% et moins de 35%, voire moins de 20% ;
   - TiO₂ : plus de 10%, de préférence plus de 15%, et moins de 40%, de préférence moins de 30 %, de préférence encore moins de 25% ;
   - ZrO₂ : plus de 50% et, de préférence, moins de 76%, voire moins de 70%,
   - SnO₂ : plus de 2%, de préférence plus de 5 %, et moins de 10%, voire moins de 6%,
   - Impuretés : moins de 2%.
- La zircone peut être combinée à l'oxyde d'étain.
- Plus de 98% en poids de la zircone est en phase monoclinique.

Quel que soit le mode de réalisation, le grain selon l'invention comporte de préférence au moins 0,1%, de préférence au moins 0,5% et /ou moins de 3% de MgO, en pourcentages en masse sur la base des oxydes, les plages des autres constituants données ci-dessus n'étant pas modifiées.

Pour un total de 100%, des compositions chimiques du grain sont alors les suivantes, en pourcentages en masse sur la base des oxydes :
- Al₂O₃ : plus de 10%, de préférence plus de 15% et moins de 35%, voire moins de 20% ;
- TiO₂ : plus de 10%, de préférence plus de 15%, et moins de 40%, de préférence moins de 30 %, de préférence encore moins de 25% ;
- ZrO₂ : plus de 50% et, de préférence, moins de 76%, voire moins de 70%,
- SnO₂ : optionnel,
- MgO : optionnel,
- Impuretés : moins de 2%.

Lorsque SnO₂ est présent, sa teneur est de préférence supérieure à 2%, de préférence à 5 %, et/ou inférieure à 10%, voire à 6%.

Lorsque MgO est présent, sa teneur est de préférence supérieure à 0,1 %, de préférence à 0,5 %, et/ou inférieure à 3%, voire à 2,5%.

Les « impuretés » comprennent les constituants autres que SnO₂, TiO₂, Al₂O₃, ZrO₂, et, lorsqu'il est mentionné explicitement MgO, en particulier les composés faisant partie du groupe des oxydes, nitrures, oxynitrures, carbures, oxycarbures, carbonitrures et espèces métalliques de sodium et autres alcalins, fer, silicium, vanadium et chrome. L'oxyde d'hafnium, naturellement présent dans les sources de zircone à des teneurs inférieures à 2%, n'est pas considéré comme une impureté. Le carbone résiduel, exprimé comme C, fait partie des impuretés de la composition des grains selon l'invention.

On considère qu'une teneur en impuretés inférieure à 2% ne supprime pas l'effet technique procuré par l'invention.

L'invention concerne également un procédé de fabrication de grains fondus d'alumine - oxyde de titane - zircone selon l'invention, comprenant les étapes successives suivantes :
a) mélange de matières premières pour former une charge de départ ;
b) fusion de la charge de départ jusqu'à obtention d'un liquide en fusion,
c) refroidissement dudit liquide en fusion de manière que le liquide fondu soit entièrement solidifié en moins de 3 minutes, de préférence en moins d'une minute, de préférence encore en moins de 15 secondes, jusqu'à obtention d'une masse solide,
d) optionnellement, broyage de ladite masse solide de manière à obtenir un mélange de grains.

Selon l'invention, les matières premières sont choisies à l'étape a) de manière que les grains obtenus à l'étape d) soient conformes à l'invention.

De préférence, on ajoute volontairement, c'est-à-dire systématiquement et méthodiquement, à l'étape a) un ou plusieurs des oxydes parmi Al₂O₃, TiO₂, ZrO₂, SnO₂, et MgO, leurs précurseurs et leurs mélanges dans des quantités garantissant que les grains obtenus à l'étape c) soient conformes à l'invention.

Tout procédé conventionnel de fabrication de grains d'alumine-oxyde de titane-zircone fondus peut être mis en oeuvre, pourvu que la composition de la charge de départ permette d'obtenir des grains présentant une composition conforme à celle des grains selon l'invention.

A l'étape a), le titane peut être introduit sous une forme quelconque, en particulier sous forme métallique ou sous forme d'un alliage zircone-oxyde de titane, ou de titanate d'alumine.

Des compositions permettant d'obtenir des phases Zr₅Ti₇O₂₄ et/ou de titanate d'alumine Al₂TiO₅ et/ou de ZrTiO₄, en évitant la phase TiO₂, peuvent être facilement déterminées par l'homme du métier à partir du diagramme de phases dans le ternaire Al₂O₃-TiO₂-ZrO₂ et plus précisément le long du pseudo-binaire Al₂TiO₅-ZrO₂.

La détermination des teneurs des différentes matières premières dans la charge de départ doit également tenir compte de la diminution de la teneur en SnO₂ pendant la cuisson à l'étape b). L'intensité de cette diminution en fonction des conditions de cuisson est bien connue de l'homme du métier.

A l'étape b), on utilise de préférence un four à arc électrique, mais tous les fours connus sont envisageables, comme un four à induction ou un four à plasma, pourvu qu'ils permettent de faire fondre complètement la charge de départ. La cuisson est de préférence effectuée dans des conditions neutres, par exemple sous argon, ou oxydantes, de préférence à pression atmosphérique.

A l'étape c), le refroidissement est rapide, c'est-à-dire de manière que le liquide fondu soit entièrement solidifié en moins de 3 minutes. De préférence il résulte d'un coulage dans des moules CS tels que décrits dans US 3,993,119 ou d'une trempe. Avantageusement, un tel refroidissement rapide évite l'apparition d'une phase de TiO₂. Un refroidissement lent produit au contraire une dissociation des phases conduisant ainsi aux espèces : Al₂O₃+TiO₂ ou ZrO₂+TiO₂.

A l'étape d), la masse solide est broyée, selon des techniques conventionnelles.

L'invention concerne enfin une plaque tiroir en un matériau composite fritté présentant des grains fondus d'alumine - oxyde de titane - zircone selon l'invention liés par une matrice d'alumine-zircone.

Les exemples suivants sont fournis à titre illustratif et ne limitent pas la portée de l'invention.

La référence 1 (Réf. 1) est un produit ZrO₂-mullite commercialisé par la société Treibacher Schleifmittel.

La référence 2 (Réf. 2) est le produit FAZ 40. Ce produit est une alumine-zircone commercialisée par la société Sowa Denko.

Pour préparer les échantillons des exemples 1, 2 et 3, des poudres sont mélangées au turbula pendant 2 heures puis fondues dans un creuset en graphite sous atmosphère d'argon au moyen d'un four à induction. Le refroidissement dépend de l'inertie du four. On obtient ainsi des échantillons généralement réduits qui nécessitent un traitement thermique d'oxydation post-fusion.

Pour les autres exemples et les produits de référence, les mélanges de poudres ont été fondus au four à arcs électriques, sous air, avec une marche électrique oxydante. Le refroidissement a été contrôlé grâce à différents procédés (moule CS permettant un refroidissement rapide de l'échantillon, lingot refroidi à l'air libre ou bloc de recuisson).

Les matières premières étaient les suivantes : zircone monoclinique CC10 commercialisée par SEPR, Alumine AR75 de Pechiney, Oxyde d'étain de Keeling & Walker Ltd., rutile TiO₂ de CRB GmbH.

La composition chimique, indiquée en pourcentages en poids sur la base des oxydes, a été mesurée selon des méthodes classiques : L'analyse chimique a été effectuée par fluorescence des rayons X.

Les phases cristallines présentes dans les produits réfractaires ont été déterminées par diffraction des rayons X. Dans le tableau 1, « ∼ » signifie « traces ».

Le coefficient de dilatation à 1000°C « a » a été mesuré sur des pastilles préparées à partir de poudres de même tranche granulométrique (diamètre médian d <150µm) compactées à 20kN sur 13 mm, puis frittées (1450°C, 3h sous air).

La corrosion des grains par les laitiers a été évaluée par microscopie optique après calcination à 1450°C d'un mélange grains-laitier. Le laitier est essentiellement constitué de SiO₂ (40%), CaO (40%), Na₂O (10%) et Al₂O₃ (5%). Il présente un indice de Basicité (CaO+MgO)/SiO₂ de 1. Bien que les grains ne soient pas destinés à entrer en contact avec un laitier, la corrosion en laitier permet d'imposer des conditions particulièrement sévères et de mesurer ainsi des corrosions significatives. Une note « R » comprise entre 0 à 4 a été attribuée, la résistance à la corrosion étant d'autant meilleure que la note R est élevée.

La température de transformation allotropique « T » des grains testés doit être la plus proche possible de celle de la référence 2 (grains alumine-zircone) afin que les microfissures améliorent efficacement la capacité du matériau composite, formé à partir d'un mélange de ces deux types de grains, à absorber l'énergie lors des chocs thermiques, comme expliqué en introduction. En revanche, pour la même raison, le coefficient de dilatation à 1000°C, « a », d'un matériau testé doit être le plus éloigné possible de celui de la référence 2.

« V » désigne la vitesse de solidification du liquide en fusion : « H » et « J » signifient « quelques heures » et « quelques jours », respectivement. « <10s » signifie « inférieur à 10 secondes ».

Les résultats sont résumés dans le tableau 1 suivant.

**Tableau 1**

| | V | Composition chimique | | | | | Phases | Phases après 10 h à 1100°C | a | T | R |
|---|---|---|---|---|---|---|---|---|---|---|---|
| | | Al₂O₃ | TiO₂ | MgO | ZrO₂ | SnO₂ | | | | | |
| Réf 1* | | | | | | | | | 6,9.10⁻⁶°C⁻¹ | 1050°C | 1 |
| Réf 2* | | | | | | | | | 9,6.10⁻⁶°C⁻¹ | 1100°C | 0 |
| 3* | H | 40.4% | 31,0% | | 28.6% | | Zr₅Ti₇O₂₄,Al₂O₃, | | 5,4,10⁻⁶°C⁻¹ | 500°C | 1 |
| 4 | <10s | 21,5% | 20,2% | | 58,3% | | mZrO₂,Al₂TiO₅ | mZrO₂, Al₂TiO₅,- TiO₂ | 7,3.10⁻⁶°C⁻¹ | 770°C | 4 |
| 5 | H | 20,2% | 19,5% | | 60,3% | | mZrO₂,Al₂TiO₅, -Zr₅Ti₇O₂₄ | mZrO₂, Al₂O₃,TiO₂, - Al₂TiO₅ | 7,3.10⁻⁶°C⁻¹ | 770°C | 2 |
| 6 | J | 25,7% | 21,0% | | 53,3% | | MZrO₂, Al₂TiO₅, -Al₂O₃, -Al₂Ti₇O₁₅ | | | | 2 |
| 7 | <10s | 19,6% | 15.9% | | 58,6% | 5,9% | mZrO₂, Al₂TiO₅, -SnO₂ | | 8,2.10⁻⁶°C⁻¹ | 960°C | 3 |
| 8* | J | 18,8% | 14,5% | | 62,4% | 4,3% | mZrO₂, Al₂O₃, TiO₂, -Al₂TiO₅, -Zr_{0.8}Sn_{0.4}TiO₄ | | | | 2 |
| 9* | J | 12,4% | 10,0% | | 75,3% | 2,3% | mZrO₂, Al₂O₃, TiO₂, -Al₂TiO₅, -Zr_{0.8}Sn_{0.4}TiO₄ | | | | 2 |
| 10 | <10s | 18,3% | 22,2% | 20% | 57,4% | | mZrO₂,solution solide AlTiMgO | mZrO₂, solution solide AlTiMgO | 4,9.10⁻⁶°C⁻¹ | 842°C | 4 |
| 11 | H | 18,1% | 22,0% | 2,0% | 57,9% | | mZrO₂, solution solide AlTiMgO | mZrO₂, solution solide AlTiMgO | 6.10⁻⁶°C⁻¹ | 811°C | 2 |

| | | | | | | | | | | | |
|---|---|---|---|---|---|---|---|---|---|---|---|
| *Exemples hors invention | | | | | | | | | | | |

Le tableau 1 ci-dessus indique que les grains selon l'invention présentent des coefficients de dilatation « a » suffisamment éloignés de ceux des grains d'alumine-zircone (référence 2) pour générer des microfissures dans des matériaux composites frittés formés à partir de ces deux types de grains. Les grains selon l'invention peuvent ainsi être substitués aux grains de mullite-zircone selon la technique antérieure pour fabriquer des plaques tiroirs en matériau composite, les grains fondus d'alumine - oxyde de titane - zircone selon l'invention étant liés par une matrice d'alumine-zircone.

Le tableau 1 montre également l'avantage d'un refroidissement rapide (exemples 4 et 7), ainsi que l'inconvénient de la présence d'une phase TiO₂ (exemple 3), pour améliorer la résistance à la corrosion.

D'autres mesures ont également montré que les grains selon l'invention présentent un coefficient de dilatation dont l'évolution en fonction de la température est semblable à celle des grains de zircone-mullite. En particulier, la transformation allotropique de la zircone conduit à une rupture dans l'évolution du coefficient de dilatation. Pour que cette rupture ait lieu à la température la plus élevée possible, avantageusement sensiblement à la même température que celle des grains d'alumine-zircone, il est préférable que la zircone dans les grains selon l'invention soit totalement sous forme monoclinique (plus de 98%).

Le titane étant un stabilisant de la zircone, il est ainsi préférable que sa teneur soit réduite dans la charge de départ. De préférence la teneur en TiO₂ dans la charge de départ est donc inférieure à 40%, de préférence à 30 %, de préférence encore à 25 %,

Comme le montrent les exemples 10 et 11, la présence de magnésie améliore encore les performances des grains selon l'invention. De préférence, les grains selon l'invention comportent au moins 0,1%, de préférence au moins 0,5% de MgO. Les exemples 10 et 11 montrent qu'une teneur proche de 2%, notamment comprise entre 1,5 et 2,5 %, fournit de très bons résultats.

En particulier, un traitement thermique pendant 10 h à 1100°C, représentatif des conditions thermiques rencontrées en service, montre que les phases, et donc les propriétés des grains, restent stables.

En outre, de manière remarquable, la présence de MgO selon l'invention évite la formation de TiO₂, néfaste.

De préférence cependant, la teneur en MgO est inférieure à 3%, en pourcentage massique sur la base des oxydes. Au-delà de cette limite, une partie de la magnésie stabilise la zircone et le pourcentage de zircone monoclinique peut être inférieur à 98%.

Les exemples 10 et 11 sont considérés comme préférés entre tous car ils permettent d'obtenir un compromis optimal entre les différentes propriétés.

Dans un mode de réalisation préféré de l'invention, les grains selon l'invention présentent ainsi les teneurs massiques suivantes, en pourcentages massiques sur la base des oxydes :
- Al₂O₃ : plus de 16% et/ou moins de 20%,
- TiO₂ : plus de 20% et/ou moins de 24%,
- MgO : plus de 1 % et/ou moins de 3%,
- ZrO₂ : plus de 55% et/ou moins de 60%.

Sans être liés par cette explication théorique, les inventeurs considèrent que les grains selon l'invention agissent de la même manière que les grains de mullite-zircone pour microfissurer le matériau composite, et donc pour le rendre plus résistant aux chocs thermiques.

A la différence des grains de zircone-mullite, les grains selon l'invention ne conduisent cependant pas un environnement silicié, qui serait à l'origine d'une faible résistance à la corrosion. La mise en oeuvre de grains d'alumine-oxyde de titane-zircone selon l'invention à la place de grains de mullite-zircone selon la technique antérieure permet donc de conserver une résistance aux chocs thermiques efficace, tout en améliorant la résistance à la corrosion.

## Revendications

1. Grain fondu d'alumine - oxyde de titane - zircone présentant la composition chimique suivante :
- Al₂O₃ : plus de 10% et moins de 35% ;
- TiO₂ : plus de 10% et moins de 40% ;
- ZrO₂ : plus de 50%,
la somme des teneurs massiques en Al₂O₃, TiO₂, ZrO₂, MgO, SnO₂, et en impuretés représentant un total de 100%, la teneur en impuretés étant inférieure à 2%, MgO et SnO₂ étant optionnels, les pourcentages étant des pourcentages en masse sur la base des oxydes, le grain ne présentant pas de phase de TiO₂ et plus de 98 % en masse de la zircone étant monoclinique.

2. Grain fondu selon la revendication précédente, dans lequel :
- MgO : 0 à 3%, et/ou
- SnO₂ ; 0 à 10%.
en pourcentages en masse sur la base des oxydes.

3. Grain fondu d'alumine - oxyde de titane - zircone selon la revendication précédente dans lequel :
- SnO₂ : plus de 2 % ,
en pourcentage en masse sur la base des oxydes.

4. Grain fondu selon la revendication précédente dans lequel la teneur en oxyde d'étain (SnO₂) est de plus de 5 %, en pourcentage en masse sur la base des oxydes.

5. Grain fondu selon l'une quelconque des revendications précédentes, dont la composition chimique présente les teneurs suivantes :
- Al₂O₃ : plus de 15% et/ou
- TiO₂ : plus de 15% et/ou moins de 30 %, et/ou
- ZrO₂ : moins de 70%,
les pourcentages étant des pourcentages en masse sur la base des oxydes.

6. Grain fondu selon l'une quelconque des revendications précédentes, présentant une teneur en TiO₂ inférieure à 25%, en pourcentage en masse sur la base des oxydes.

7. Grain fondu selon l'une quelconque des revendications précédentes comportant environ 60% de ZrO₂, environ 20% de Al₂O₃ et environ 18 à 20% de TiO₂.

8. Grain fondu selon l'une quelconque des revendications précédentes ne présentant que des phases de Al₂O₃ avec Zr₅Ti₇O₂₄ et/ou de ZrTiO₄ ou ZrO₂ avec du titanate d'alumine Al₂TiO₅.

9. Grain fondu selon l'une quelconque des revendications précédentes dont 100 % de la zircone est monoclinique.

10. Grain fondu selon l'une quelconque des revendications précédentes, dans lequel
- MgO : plus de 0,1 %,
en pourcentage en masse sur la base des oxydes.

11. Grain fondu selon la revendication précédente comportant au moins 0,5% de MgO, en pourcentage massique sur la base des oxydes.

12. Grain fondu selon l'une quelconque des revendications précédentes présentant, pour un total de 100%, la composition chimique suivante, en pourcentages massiques sur la base des oxydes :
- Al₂O₃ : plus de 16% et/ou moins de 20%,
- TiO₂ : plus de 20% et/ou moins de 24%,
- MgO : plus de 1 % et/ou moins de 3%,
- ZrO₂ : plus de 55% et/ou moins de 60%.

13. Plaque tiroir en un matériau composite fritté présentant des grains fondus d'alumine - oxyde de titane - zircone selon l'une quelconque des revendications précédentes liés par une matrice d'alumine-zircone.

14. Procédé de fabrication de grains fondus d'alumine - oxyde de titane - zircone, comprenant les étapes successives suivantes :
a) mélange de matières premières pour former une charge de départ ;
b) fusion de la charge de départ jusqu'à obtention d'un liquide en fusion,
c) refroidissement dudit liquide en fusion de manière que le liquide fondu soit entièrement solidifié en moins de 3 minutes, jusqu'à obtention d'une masse solide,
d) optionnellement, broyage de ladite masse solide de manière à obtenir un mélange de grains,
**caractérisé en ce que**, à l'étape a), les matières premières sont choisies de manière que les grains obtenus à l'étape d) soient conformes à l'une quelconque des revendications 1 à 12.

15. Procédé de fabrication de grains fondus d'alumine - oxyde de titane - zircone selon la revendication précédente dans lequel, à l'étape c), le liquide fondu est entièrement solidifié en moins de 1 minute.

16. Procédé de fabrication de grains fondus d'alumine - oxyde de titane - zircone selon la revendication précédente dans lequel, à l'étape c), le liquide fondu est entièrement solidifié en moins de 15 secondes.

## Claims

1. An alumina - titanium oxide - zirconia fused grain presenting the following chemical composition:
- Al₂O₃: more than 10% and less than 35%;
- TiO₂: more than 10% and less than 40%;
- ZrO₂: more than 50%;
the total of the weight contents of Al₂O₃, TiO₂, ZrO₂, MgO, SnO₂ and of the impurities representing 100%, the content of impurities being less than 2%, MgO and SnO₂ being optional, the percentages being percentages by weight on the basis of the oxides, the grain presenting no TiO₂ phase and more than 98% by weight of the zirconia being monoclinic.

2. A fused grain according to the preceding claim, in which :
• MgO: 0 to 3%, and/or,
• SnO₂: 0 to 10%.
in percentages by weight based on the oxides.

3. A alumina - titanium oxyde - zirconia fused grain according to the preceding claim, is which :
• SnO₂: more than 2%
in percentages by weight based on the oxides.

4. A fused grain according to the preceding claim, in which the concentration of tin (SnO₂) is more than 5%, in percentages by weight based on the oxides.

5. A fused grain according to any one of the preceding claims, the chemical composition presenting the following concentrations:
• Al₂O₃: more than 15%; and/or
• TiO₂: more than 15% and/or less than 30%; and/or
• ZrO₂: less than 70%;
the percentages being percentages by weight on the basis of the oxides.

6. A fused grain according to any one of the preceding claims, presenting a TiO₂ content of less than 25% by weight on the basis of the oxides.

7. A fused grain according to any one of the preceding claims, having about 60% ZrO₂, about 20% Al₂O₃, and about 18% to 20% TiO₂.

8. A fused grain according to any one of the preceding claims, presenting phases only of Al₂O₃ with Zr₅Ti₇O₂₄ and/or of ZrTiO₄ or ZrO₂ with alumina titanate Al₂TiO₅.

9. A fused grain according to any one of the preceding claims, in which 100% of the zirconia is monoclinic.

10. A fused grain according to any one of the preceding claims, in which:
• MgO: more than 0.1%,
in percentage by weight based on the oxides.

11. A fused grain according to the preceding claim, comprising at least 0.5% of MgO, in percentage by weight based on the oxides.

12. A fused grain according to any one of the preceding claims, presenting for a total of 100%, the following chemical composition, in percentages by weight based on the oxides:
• Al₂O₃: more than 16% and/or less than 20%;
• TiO₂: more than 20% and/or less than 24%;
• MgO: more than 1% and/or less than 3%;
• ZrO₂: more than 55% and/or less than 60%.

13. A slide gate made of a sintered composite material presenting alumina - titanium oxide - zirconia fused grains according to any one of the preceding claims bounded by an alumina-zirconia matrix.

14. A method of fabricating alumina - titanium oxide - zirconia fused grains, the method comprising the following successive steps:
a) mixing raw materials to form an initial charge;
b) melting the initial charge to obtain a molten liquid;
c) cooling said molten liquid so that the molten liquid is entirely solidified in less than 3 minutes, so as to obtain a solid mass; and
d) optionally grinding said solid mass so as to obtain a mixture of grains;
**characterized in that**, in step a), the raw materials are selected in such a manner that the grains obtained in step d) are in accordance with any on of claims 1 to 12.

15. A method according to the preceding claim for manufacturing alumina - titanium oxide - zirconia fused grains in which, in step c), the molten liquide is entirely solidified in less than 1 minute.

16. A method according to the preceding claim for manufacturing alumina - titanium oxide - zirconia fused grains in which, in step c), the molten liquide is entirely solidified in less than 15 seconds.

## Patentansprüche

1. Aus Aluminiumoxyd, Titandioxyd und Zirkonoxyd geschmolzene Korn mit folgender chemischer Zusammensetzung:
- Al₂O₃: mehr als 10% und weniger als 35%;
- TiO₂: mehr als 10% und weniger als 40%;
- ZrO₂: mehr als 50%,
wobei die Summe der Massengehalte von Al₂O₃, TiO₂, ZrO₂, MgO, SnO₂ und Verunreinigungen insgesamt 100% ausmachen, wobei der Gehalt an Verunreinigungen kleiner als 2% ist, MgO und SnO₂ optional sind, und die Prozentanteile Massenprozente auf der Basis von Oxyden sind und das Korn keine TiO₂ -Phase aufweist und mehr als 98% der Zirkonoxydmasse monoklin ist.

2. Geschmolzenes Korn gemäß dem vorherigen Patentanspruch, bei dem:
- MgO: 0 bis 3%, und/oder
- SnO₂: 0 bis 10% in Massenprozenten auf der Oxydbasis sind.

3. Geschmolzenes Korn aus Aluminiumoxyd, Titandioxyd, Zirkonoxyd gemäß dem vorhergehenden Anspruch, bei dem:
- SnO₂: mehr als 2% in Massenprozenten auf Oxydbasis sind.

4. Geschmolzenes Korn nach dem vorhergehenden Anspruch, bei dem der Gehalt an SnO₂ mehr als 5% ist in Massenprozent auf oxydbasis.

5. Geschmolzenes Korn nach einem der vorhergehenden Ansprüche, dessen chemische Zusammensetzung folgende Gehalte aufweist:
- Al₂O₃: mehr als 15% und/oder
- TiO₂: mehr als 15% und/oder weniger als 30%, und/oder
- ZrO₂: weniger als 70% sind, wobei die Prozentzahlen Massenprozente auf Oxydbasis sind.

6. Geschmolzenes Korn nach einem der vorhergehenden Ansprüche, welches einen Gehalt an TiO₂ aufweist, der kleiner als 25% ist, in Massenprozent auf der Oxydbasis.

7. Geschmolzenes Korn nach einem der vorhergehenden Ansprüche mit ungefähr 60% ZrO₂, ungefähr 20% Al₂O₃ und ungefähr 18 bis 20% TiO₂.

8. Geschmolzenes Korn nach einem der vorhergehenen Ansprüche, welches nur Phasen von Al₂O₃ mit Zr₅Ti₇O₂₄ und/oder ZrTiO₄ oder ZrO₂ mit Aluminiumtitanat Al₂TiO₅ aufweist.

9. Geschmolzenes Korn nach einem der vorhergehenden Ansprüche, wobei 100% des Zirkonoxyds monoklin ist.

10. Geschmolzenes Korn nach einem der vorergehenden Ansprüche, bei dem
- MgO: mehr als 0,1% in Massenprozent auf Oxydbasis ist.

11. Geschmolzenes Korn nach dem vorhergehenden Anspruch, welches mindestens 0,5% MgO in Massenprozent auf Oxydbasis aufweist.

12. Geschmolzenes Korn nach einem der vorhergehenden Ansprüche, welches bei einer Gesamtheit von 100% die folgende chemische Zusammensetzung in Massenprozent auf Oxydbasis aufweist:
- Al₂O₃: mehr als 16% und/oder weniger als 20%,
- TiO₂: mehr als 20% und/oder weniger als 24%,
- MgO: mehr als 1% und/oder weniger als 3%,
- ZrO₂: mehr als 55% und/oder weniger als 60%.

13. Schieberplatte aus einem gesinterten Kompositmaterial mit aus Aluminiumoxyd, Titandioxyd und Zirkonoxyd geschmolzenen Körnern nach einem der vorhergehenden Ansprüche welche durch eine Aluminium-Zirkonmatrix gebunden sind.

14. Herstellungsverfahren der aus Aluminiumoxyd, Titandioxyd und Zirkonoxyd geschmolzenen Körner, welches folgende aufeinanderfolgende Schritte aufweist:
a) Mischung der ersten Materialien um eine Startcharge zu bilden;
b) Schmelzen der Ausgangscharge bis zum Erhalt einer flüssigen Schmelze,
c) Abkühlen der flüssigen Schmelze derart, dass die geschmolzene Flüssigkeit vollständig innerhalb von wenigstens 3 Minuten verfestigt ist bis zum Erhalt einer festen Masse,
d) optional Zermahlen der festen Masse derart, dass eine Kornmischung erhalten wird,
**dadurch** gekennzeichent, dass im Schritt a) die ersten Materialien derart gewählt sind, dass die in Schritt d) erhaltenen Körner mit einem der Ansprüche 1 bis 12 konform sind.

15. Herstellungsverfahren von aus Aluminiumoxyd, Titandioxyd und Zirkonoxyd geschmolzenen Körnern nach dem vorhergehenden Anspruch, bei welchem in Schritt c) die geschmolzene Flüssigkeit vollständig in wenigstens 1 Minüte verfestigt ist.

16. Herstellungsverfahren von aus Aluminiumoxyd, Titandioxyd und Zirkonoxyd geschmolzenen Körnern nach dem vorhergehenden Anspruch, bei dem in Schritt c) die geschmolzene Flüssigkeit vollständig in wenigstens 15 Sekunden verfestigt ist.
